# EUROPEAN PATENT APPLICATION

(11) **EP 4 203 339 A1**
(43) Date of publication of application: **28.06.2023**
(21) Application number: 22210816.9
(22) Date of filing: 01.12.2022
(51) Int. Cl.: H04B 7/06, G06N 3/04, G06N 3/08

(54) **A METHOD BASED ON ARTIFICIAL INTELLIGENCE FOR RAPID RECONFIGURATION OF AESA RADIATION PATTERNS**

(30) Priority: 21.12.2021 IT 202100031976
(71) Applicant: MBDA ITALIA S.p.A., 00131 Roma (IT)
(72) Inventor: VINETTI, PIETRO, I-00131 ROMA (IT); PETRAGLIA, GIOVANNI, I-00131 ROMA (IT); BIANCO, SIMONE, I-00131 ROMA (IT); NAPOLETANO, PAOLO, I-00131 ROMA (IT)
(74) Representative: Perronace, Andrea

(57) **Abstract**

The present invention relates to a method based on artificial intelligence for the rapid reconfiguration of AESA ("Active Electronically Scanned Array") beams, for example for the reconfiguration of beams emitted by AESA antennas for the purpose of canceling jammers or other disturbances.

## Description

The present invention relates to a method based on artificial intelligence for the rapid reconfiguration of the antenna beam (radiation pattern) of AESA ("Active Electronically Scanned Array") antennas, for example for the reconfiguration of the radiation pattern of the antenna array, when in receiving mode, for the purpose of cancelling/mitigating intentional jammers or other disturbances.

### Background art

The problem of synthesis of antenna arrays has different formulations and mathematical properties depending on the parameters characterizing the array, the unknowns to be determined, the effective objective of the synthesis (sidelobe mask, shape of the radiation pattern, maximum directivity, position of the zeros of the pattern or an appropriate combination of these factors) . The formulation of the problem, in a general view, involves linear (excitation currents of the array antennas) and highly non-linear (lattice positions of the array elements) dependencies with the radiative parameters of the array. Therefore, the complexity thereof can switch from a quadratic programming to an NP-hard problem [1], [2].

In recent years, various analytical and numerical techniques have been developed for the synthesis of antenna patterns based on the specific problem of synthesis and on the type of lattice (position grid) of the array (uniformly spaced array, aperiodic array, thinned array, sparse array), based on deterministic approaches, such as global [2], [3] and local [4] optimization, and on stochastic optimization schemes, such as simulated annealing [5], particle swarm [6], genetic algorithms [7]. Global optimizations are limited in their performance by the rapid growth in the array size, the computational cost required to obtain the solution, and the fact that the solution is the global optimum only in a probabilistic sense [3]. A local optimization can be effectively applied when the lattice of the array is given and only the excitations of the array are unknown and need to be determined to satisfy a pre-assigned pattern mask or to maximize directivity, even when an upper mask is imposed in the sidelobe regions. In fact, it has been shown that the problem can be transformed into a convex problem and solved by means of standard quadratic programming techniques [8], [9] . There are also hybrid approaches, which take advantage of the convexity of the problem with respect to a part of the degrees of freedom [10]-[12].

Unfortunately, due to the intrinsic iterative nature of conventional optimization (whether based on deterministic or stochastic approaches), this can take a long time to converge to an optimal or suboptimal solution, since a large number of iterations or complex calculations is conventionally required for evaluating gradients and/or matrix inversion. Therefore, these optimizations are practically unsuitable for implementation on "near real-time" applications, such as those described above.

The use of deep learning techniques to solve problems related to electromagnetism is not new [13]. In the work by Zooghby et al. [14] a 3-layer feed-forward network was used to calculate the optimal currents to produce a specific output model based on a steering matrix and the received signals. The possibility to calculate the currents needed to produce a radiation pattern only defined by some constraints was explored by Merad et al. [15], where the radiation pattern was not defined in the shape thereof, but only by a constraint in the amplitude of the sidelobes produced. A more advanced beamforming using deep learning techniques has been suggested by Zaharis et al. [16], in which a neural network was used to calculate the optimal set of currents to feed an antenna array in order to steer the main lobe in the desired direction and, at the same time, produce a radiation pattern as low as possible in the (one or more) directions from which the external interference comes. With the rise in popularity of more specialized deep learning models, such as Convolutional Neural Networks (CNNs), the possibility to use spatially invariant filters to calculate the optimal radiation pattern has become a promising way for improving previous models while keeping calculation costs low and extending the depth thereof. In the specific case of beamforming, encoding the desired radiation pattern in an image has been explored by Shan et al. [17], where the model learned to produce near-optimal currents using a convolutional architecture. Another use of convolutional neural networks for electromagnetic optimization tasks is the selection of the optimal sub-array for transmitting a signal [18].

There remains a need for a method which can optimize the beam directivity of an AESA system.

The most recent and interesting approach to adaptive beamforming using deep learning is the one explored by Bianco et al. [19] . This method is based on a deep convolutional neural network which takes as input an image-like radiation pattern which encodes the desired behavior and calculates the optimal currents needed to adapt the antenna to the new specifications of the beam. The suggested approach drastically reduces computation time (up to 1700× in the benchmarks considered in [19]) with respect to conventional iterative optimization, allowing, after training, the direct computation of the optimal currents with a single inference pitch. This avoids the need for computationally expensive iterative optimizations for finding the necessary currents.

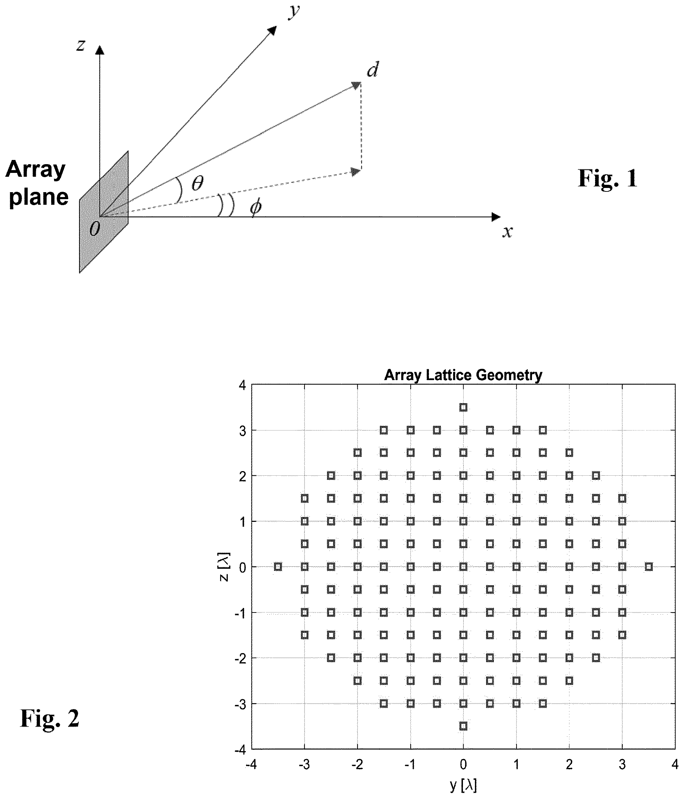

The method of Bianco et al. requires an image-like radiation pattern as input. More in detail, a one-dimensional input vector v is used, which, however, is not directly supplied to the CNN, neither during the training step nor during the testing step. On the contrary (see section IV of [19]), during the training step, the one-dimensional input vector v is passed through an optimizer (CVX) which supplies the currents optimized for the antenna. At this point, by virtue of a physical model of the antenna (F_{A} in the equation (2) of [19]), an image of the radiation emission is produced on the basis of the optimized currents. To optimize the trade-off between result precision and computational needs, the image is generated with a 721x721 resolution. The image plane is the space of the directions ϕ and θ, with ranges of variations of 180° each, whereby each movement of 1° corresponds to a movement of 4 pixels in the image plane and therefore to a resolution of 0.25°. Thereby, a library of correspondences between one-dimensional vectors v and emission images is built, on the basis of which the CNN network is trained. During the testing step, a vector v and a corresponding image are produced in an artificial manner. The CNN is thus trained on images and is also used with input images (see Figure 2 of [19]) to take advantage of the ability thereof to find spatial correlations.

However, due to the encoding of the input in an image, the method in [19] has several issues, including the inability to encode specific sets of constraints having a higher precision than the encoding threshold.

In [19], the encoding of the input constraint in the form of an artificial image has been obtained as follows:
- The direction of the main lobe was encoded in the nominal radiation pattern, generated by an optimizer to calculate the optimal radiation pattern with the position of the main lobe in the absence of external interference.
- The direction of the interference was encoded as a Gaussian deformation of the nominal configuration in the position of the interference and superimposed on the image generated in the previous step.
- The target thresholds for the sidelobe in dB and interference have been set as fixed and uncoded on input so that the network learns them implicitly.

The encoding of the one-dimensional input in the form of an image has proved to be sufficient for the solution of the beamforming problem, but it is subject to many drawbacks which make it suboptimal. The main problem of image encoding is the inability thereof to express all possible constraints of the problem space. This problem has two causes: the resolution of the input image and the need to calculate a nominal pattern regarding the artificial image to be used in tests. Due to the chosen resolution of the input image (721 × 721 pixels), the input constraint is subject to have a minimum stride (filter shift for each calculation, according to the CNN technique) of 0.25°, each movement of 1° corresponds to a movement of 4 pixels in the image space. This feature of the input image precludes the approximation of the optimal solution for inputs where the interference is not positioned at a multiple of 0.25° in both radiation directions, and therefore limits the generalization of the solution. Another limitation of the previous architecture is the need, in tests, to calculate the nominal pattern to encode the direction of the main lobe which limits the application thereof in the real world. In fact, the need to calculate a nominal pattern using the position of the main lobe is very advantageous when the samples treated by the model have a limited number of main lobe positions, making them computable in advance and kept cached during the actual operation; unfortunately, in some real-world use cases, the main lobe position is not limited to a small number of possible positions, making the need to compute a new nominal model for each new position very costly and inherently more expensive than the classical optimization algorithm which is used to calculate nominal models. Another drawback of the CNN architecture again tested in [19] was the impossibility to forcibly reduce the dimensionality of the output activations in the successive layers of the network; this is due to the fact that the problem does not benefit from the same translational invariances which are true for images of natural scenes (most common application domain for CNNs) and a small change in the image domain corresponds to a large change in the domain of the currents. This problem has precluded the use of strong max-pooling layers in the CNN which would have greatly reduced the computational complexity of the entire model. Furthermore, the implicit encoding of thresholds in the network has precluded the possibility to calculate the optimal currents with a different set of thresholds without the complete retraining (or at least fine-tuning - adaptation) of the model.

All the above motivations lead to the need to create an alternative method for calculating the optimal currents given a set of constraints which is not based on a matrix/image encoding and which can handle small changes of the input constraints while having low computational requirements.

As a matter of fact, ensuring a rapid response to the need to synthesize a new antenna pattern is hardly feasible in the cases of interest often considered (radar/datalink), since, conventionally, the updated pattern must be determined and applied in a few milliseconds in order to effectively mitigate the effects of the interfering disturbance. In these cases of interest, a fast suboptimal response can be preferred over a late optimal one, which will inevitably be useless or even detrimental, since it would no longer be related to the applicable operating scenario.

The above limitations have so far significantly negatively affected the effective implementation of the reconfigurability function in AESA-based systems.

### Purpose and object of the invention

It is the object of the present invention to provide a method based on artificial intelligence for the dynamic synthesis of an AESA radiation pattern with optimal directivity, which overcomes the drawbacks and solves the issues of all the known techniques described in the previous section. In particular, when considering applications which need to react almost in real-time, i.e., with response times which are faster than the dynamics of the application context.

An object of the present invention is a method and a related program for a calculator and electronic calculator programmed according to the appended claims.

### Detailed description of embodiments of the invention

### List of drawings

The invention will now be described by way of nonlimiting illustration, with particular reference to the drawings of the accompanying figures, in which:
- Figure 1 shows a graphical representation of a spherical reference (0,θ,ϕ) centered on an antenna according to the invention;
- Figure 2 shows an example of a possible array on which the method can be used;
- Figure 3 shows an example of a network according to an aspect of the invention, the network consisting of different layers, some fully connected (fc) and others connected with highway connections; after each layer, non-linear activation functions are used;
- Figure 4 shows the highway layers in Figure 3;
- Figure 5 shows an example of comparison between the currents obtained with a model according to the invention and those obtained with a convex optimizer;
- Figure 6 shows a block diagram illustrating the calculation and testing method according to an aspect of the present description; and
- Figures 7a-7b and 8a-8b show comparisons of patterns on a section along ϕ (left) and θ (right), patterns optimized with CP in a dashed line, patterns optimized with FNN in a solid line.

It is worth noting herein that elements of different embodiments can be combined together to provide further embodiments without restrictions by respecting the technical concept of the invention, as those skilled in the art will effortlessly understand from the description.

The present description also relates to the prior art for the implementation thereof, regarding the detail features not described, such as elements of minor importance usually used in the prior art in solutions of the same type.

When an element is introduced, it is always understood that there can be "at least one" or "one or more".

When a list of elements or characteristics is given in this description it is understood that the invention according to the invention "comprises" or alternatively "consists of" such elements.

Two or more of the parts (elements, devices, systems) described below can be freely associated and considered as part kits according to the invention.

### Embodiments

### General architecture

The present invention is based on the idea of taking advantage of Deep Learning techniques with feed-forward neural networks to address the problem of "near real-time" antenna synthesis. More specifically, neural networks are used to implement a fast suboptimal tool for the synthesis of the radiation pattern of an antenna array.

The basic idea is to take advantage of conventional tools for convex (optimal) synthesis for an off-line training of a feed-forward neural network (FFN) on a large set of cases, so that the parameters of the network are optimized with reference to the optimally solved cases and to the know-how for tackling any synthesis task, not included in the training set.

The task of beamforming is to calculate the array excitation currents (amplitude and phase) capable of radiating a specific radiation pattern which satisfies a pre-assigned mask, given the antenna configuration. The neural network is essentially suggested here as a fast, possibly suboptimal alternative to conventional synthesis techniques or CNNs due to the effective and fast implementation of the reconfigurability features in AESA systems.

Neural network architectures have been shown to behave as universal approximators, i.e., they can approximate any mathematical function with a finite number of parameters. As a result, they are capable of computing exceptionally complex mappings (mathematical functions) between the inputs and outputs thereof and have contributed to improve performance on several tasks.

AESA antenna systems have, in principle, the capability of reconfiguring/adapting the radiated beam/s to improve some metrics or mitigate some disturbances present in the operating environment. In fact, by virtue of the distributed and independent dynamic control of each excitation or of a subset of excitations (amplitude and phase) of the antenna array elements, the pattern radiated by the AESA can be modeled according to the existing operational scenario.

In a real scenario, radar and communication systems, more generally, can encounter, during operation, the unforeseeable presence of an intentional electromagnetic disturbance/interference signal (jammer), and/or of an involuntary echo, coming from the diffusion of the signal by the environment itself in which the system is deployed, and entering the field of view of the source antenna, reducing/influencing to some extent the performance of the system. Moreover, a real scenario can be characterized by the presence of a complex electromagnetic spectrum, where different radio emitters with different purposes coexist. It should be considered, for example, an environment where there are radio-television broadcast signals, 3G/4G/5G cellular network signals, Wi-Fi network signals, GNSS/GPS signals, or ship environments, where, radio communication antennas, navigation radars and, in the case of military radars, also discovery radars, shooting radars, electronic warfare systems, etc. are conventionally placed on upper decks. In such situations, the electromagnetic environment is rich in sources and it may happen that there is an overlap in the bands/frequencies of coexisting systems, which gives rise to mutual interference which, to some extent, can affect the overall performance of the system.

Radars and communication systems, based on AESA, can take advantage of adaptive beamforming and antenna beam reconfigurability to react to disturbances. Once the source/direction of the interfering signal has been identified (by means of known or future methods), it is possible to reconfigure the antenna pattern to reduce the sensitivity of the antenna in those directions from which the interference comes from, thus improving the Signal-to-Interference Ratio (SIR) at the antenna output. As an additional benefit, the reconfiguration of the AESA (reconfiguration of the excitation currents of the antenna array based on an optimized antenna pattern) allows mitigating potential malfunctions during operation in the RF chains, which malfunctions can lead to undesirable performance degradation.

Obviously, the AESA needs to react in "near real-time" to the disturbance/interference to obtain an effective response: the new lighting (excitation currents) of the antenna array has to be determined and re-applied in a time scale which is fast with respect to the dynamics of the unwanted disturbing signal received. Therefore, a key factor in making the theoretical AESA reconfiguration capability effectively usable in many real-world applications is response time: even a suboptimal solution delivered on time can be much more effective than a late but optimal response.

A significant advantage of this approach is that the spatial complexity of the task is fixed in the number of parameters; this means that the non-parametric model (in the prior art) becomes parametric, allowing a fixed temporal and spatial complexity of the calculation and allowing the use of the model for real-time applications.

Therefore, the suggested approach solves, inter alia, the issue of providing a fast and effective response to the request of reconfiguring the antenna beam, coming from the system following a disturbance/interference, thus allowing the near real-time mitigation of a jammer/echo/further in-band source/multipath.

The invention thus uses an approach based on a feed-forward neural network which takes as input a vector encoding the desired constraints on the radiation pattern. The direct use of the coding vector is an element of novelty as compared to the techniques in the literature. Such a vector is (at least) a six-dimensional vector containing the following elements:
1. the direction, referred to as ϕ₀, where maximum directivity is required for the radiation pattern with respect to the angle ϕ (or, equivalently, Azimuth);
2. the direction, referred to as **θ**₀, where maximum directivity is required for the radiation pattern with respect to the angle θ (or, equivalently, Elevation);
3. the direction, referred to as ϕ_{I} of the interference with respect to the angle ϕ (or, equivalently, Azimuth);
4. the direction, referred to as **θ**_{I}, of the interference with respect to the angle θ (or, equivalently, Elevation);
5. the optimization threshold for the sidelobes, referred to as SLL (Side Lobe Level), i.e., the maximum acceptable level of the antenna pattern in directions other than those of interest (maximum directivity); and
6. the optimization threshold for the interference, referred to as SLL_{I}, i.e., the maximum acceptable level of the radiation pattern in the specific direction of the interferer.

The angles (θ,ϕ) are to be intended as angles of a spherical reference system (0,θ,ϕ), centered on the antenna array. See Figure 1 for a graphical representation.

The output of the neural network consists of a vector of 2*N real values, corresponding to the real and imaginary parts of the antenna excitation currents, formed by N radiating elements.

The model takes the constraint vector as input and directly produces the optimal currents as a result.
The interfering signal to be canceled can be of the intentional (jammer), unintentional (another in-band source) or multipath type (delayed copy of the signal to be transmitted/received). The suggested method does not depend on the nature of the interferer/disturbance: the only relevant information for defining the input vector are the angular position of the interferer/disturbance and the level of the optimization thresholds.

Also on the basis of the above, according to a general aspect of the present description, the method for reconfiguring the radiation patterns of AESA antennas with *N* radiating elements, in order to cancel interfering signals, comprises the following steps:
A. providing a one-dimensional coding vector for coding the desired constraints on the radiation pattern, where the coding vector comprises the following components with respect to a spherical reference system centered on the antenna array:
   - a direction where maximum directivity is required for the azimuth radiation pattern;
   - a direction where maximum directivity is required for the elevation radiation pattern;
   - a direction of the azimuth interference;
   - a position of the elevation interference;
   - a Side Lobe Level (SLL) optimization threshold, for the side lobes; and
   - a Side Lobe Level Interference (SLL_{I}) optimization threshold, for the interference in said one or more directions;
B. directly providing (i.e., without further processing or reconfiguring data, for example, in an image) the one-dimensional coding vector to a feed-forward deep neural network exclusively trained on one-dimensional coding vectors to reduce the interference detected by the antenna array along said one or more directions;
C. obtaining, from said feed-forward deep neural network, a vector of 2^{∗}*N* real values, corresponding to the real and imaginary parts of the antenna excitation currents; and
D. reconfiguring the excitation currents of the antenna array based on said optimized radiation pattern.

The feed-forward deep neural network used herein is a neural network with different layers, some (at least two) fully connected and others (al least two) connected with highway connections, and in which non-linear activation functions are used after each layer. At the output of the last layer, however, it is convenient not to use such activation functions.

The interfering signal can be selected from the group comprising: jammer, further in-band source, multipath.

According to an aspect of the solution of the present description, the training of the expert algorithm occurs according to the following steps:
B1. Synthetically generating a set of coding vectors with values distributed according to a probability distribution;
B2. Supplying said set of vectors to a convex optimizer which returns an optimized vector for each vector in order to cancel the interfering signals; and
B3. Using said set of coding vectors with distributed values and said one or more optimized vectors to train the feed-forward deep neural network using a deviation measure and a corresponding acceptability threshold.

According to an aspect of the present solution, the (two or more) incompletely connected layers have connections of the highway type.

According to an aspect of the present solution, during step D, the reconfiguration occurs by means of a conversion matrix.

In order to carry out the described method, an electronic computer program can be used, comprising code means configured so that, when executed by the electronic computer, they carry out the method according to the above. A computer with the program installed will serve the practical purpose of reconfiguring AESA beams.

### Detailed description of examples

An embodiment of the invention consists of an antenna array shown in Figure 2, consisting of N = 149 elements. An array uniformly spaced at half wavelength on a circular domain with radius equal to 3.5 λ should be considered as a case of interest. The wavelength was normalized (λ=1) and the elements were considered ideally isotropic.

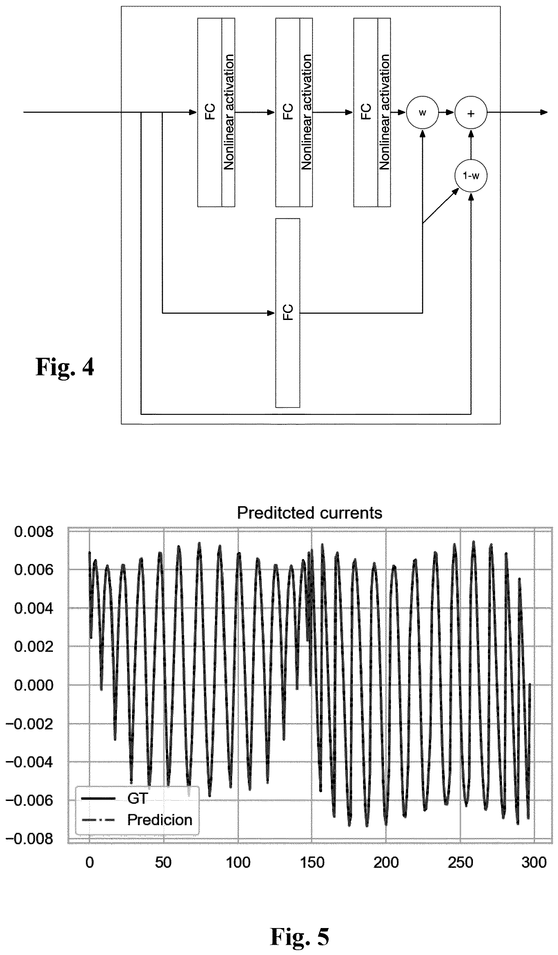

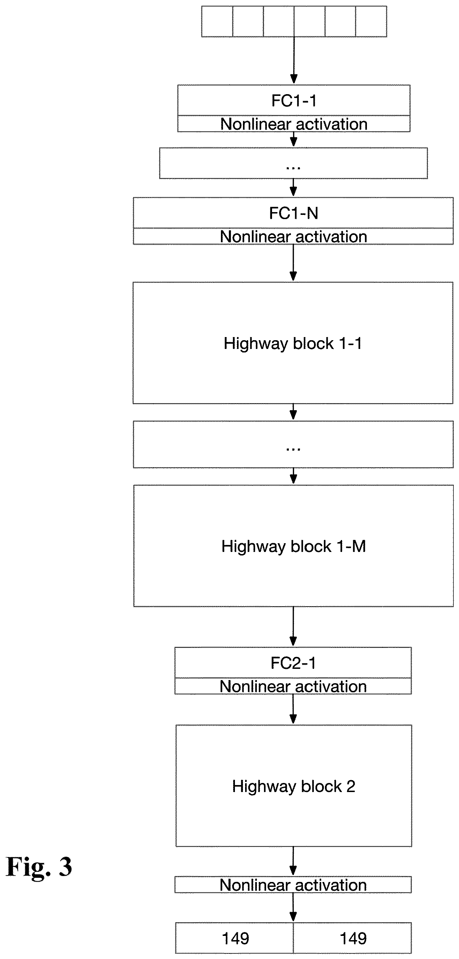

The six-dimensional input coding vector is passed through the network of the invention, for example, with the exemplary architecture in Figure 3. The model exemplified herein consists of several layers, some fully connected (fc) and others connected with highway connections. The highway layers are blocks which are depicted in detail in Figure 4. The main feature of these blocks is that they contain layers having the same size and a highway connection. After each layer, non-linear activation functions can be used, such as, for example: Sigmoid, Hyperbolic Tangent, ReLU, PRELU, Radial Basis function with Gaussian kernel. Due to the regression task of the model, it is preferable not to use activation functions on the output of the last layer of the model.

Highway blocks are residual blocks which involve connections between different layers in which the input *x* of a layer f is also added to the output of the layer *f(x).* Thereby, the final output of the connections is as follows *F(x)* = *x* + *f(x),* and is referred to as residual. Highway connections are useful because the model can learn to propagate an identity simply by setting the weights of some inputs to 0, and the addition operation helps the propagation of the gradient and reduces the vanishing gradient effect during the training step.

In the example shown herein, the network produces as output 2N = 298 values (149 real parts of the currents + 149 complex parts of the currents).

The following Table shows the dimensions of the layers of the suggested network architecture in an exemplary version:

| **Layer** | **Input dimension** | **Output dimension** |
|---|---|---|
| Input | 6 | |
| FC1-1 | 6 | 32 |
| FC1-2 | 32 | 64 |
| FC1-3 | 64 | 128 |
| FC1-4 | 128 | 256 |
| FC1-5 | 256 | 2056 |
| | 2056 | 2056 |
| Highway block 1-1 | 2056 | 2056 |
| | 2056 | 2056 |
| Highway block 1-2 | 2056 | 2056 |
| | 2056 | 2056 |
| | 2056 | 2056 |
| FC2-1 | 2056 | 298 |
| Highway block 2 | 298 | 298 |
| | 298 | 298 |
| | 298 | 298 |
| Output | 298 (2 x 149) | |

To train the neural network, a set of synthetic data was generated.

A set of 500 thousand 6-dimensional input data (vectors), as previously described, was synthetically generated according to a probability distribution so as to optimize the training on the portion of the space of possibilities of greatest application interest. These data have been provided as input to a convex optimizer which returns the optimal solutions (optimal currents) to be used as labels for training the neural model. The currents can then be normalized to improve the speed of convergence, and the training and testing dataset can be split according to an 80% and 20% split.

The exemplified approach implicitly considers the currents calculated by the optimizer as the best possible currents, and does not assume any possible improvement thereon.

Once the model was trained, the currents predicted by the model were compared with the data of the expected results (those generated by the convex optimizer) using the mean squared error (MSE).

The choice of the MSE as an example of deviation measure to evaluate the quality of the results achieved is motivated by the fact that a low MSE in the space of the currents corresponds to a low difference in the generated radiation patterns. The MSE error committed on the training set is 1.36535e-10, while the one on the test set is 1.7596e-10. Figure 5 shows an example of comparison between the currents obtained with the suggested model and those obtained with the convex optimizer. As it can be seen, there is a substantial overlap between the two sets of currents.

In addition to this metric (deviation measure), other measurements can also be used, which give a much more intuitive measure of the quality of the solutions generated, such as, for example:
- MaxSLL: maximum violation of the sidelobe level (SLL) imposed in dB;
- Directivity Loss: loss of directivity of the reconfigured pattern with respect to the nominal one; and
- Interference suppression (reduction) (IS): suppression (reduction) achieved in the angular position of the interference in dB.

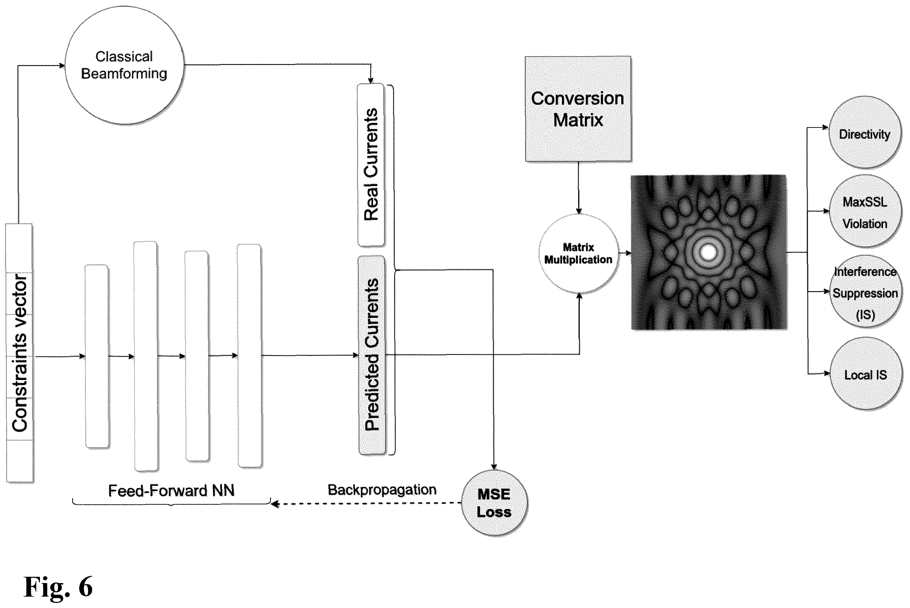

For the FNN model of the present description, it is preferable and convenient to convert the outputs of the FNN model by means of a conversion matrix to generate the radiation pattern. A complete training and testing method according to the present description is shown in Figure 6, which, on the left side, shows the training step with the calculation of the MSE, and the backpropagation for updating the internal weights of the FNN; on the right side, it contains instead the testing step: once a prediction of the currents has been obtained, it is possible to generate the pattern by means of the conversion matrix and, on this, calculate the further metrics described above (MaxSLL, Directivity Loss, Suppression of the interference).

It is also possible to define an acceptability threshold for the deviation measure.

The suppression of the interference below a certain value is thus carried out at the same level of the sensitivity of the antenna in the directions from which the interference comes.

The following table shows a numerical comparison between the predictions provided by the suggested network and the optimal solutions provided by the convex optimizer on the testing dataset:

| Method | Directivity | IS | MaxSLL |
|---|---|---|---|
| Optimizer (convex) | 21.6 | 3.5 | 1.82 |
| Suggested Method | 21.6 | 4.4 | 1.83 |

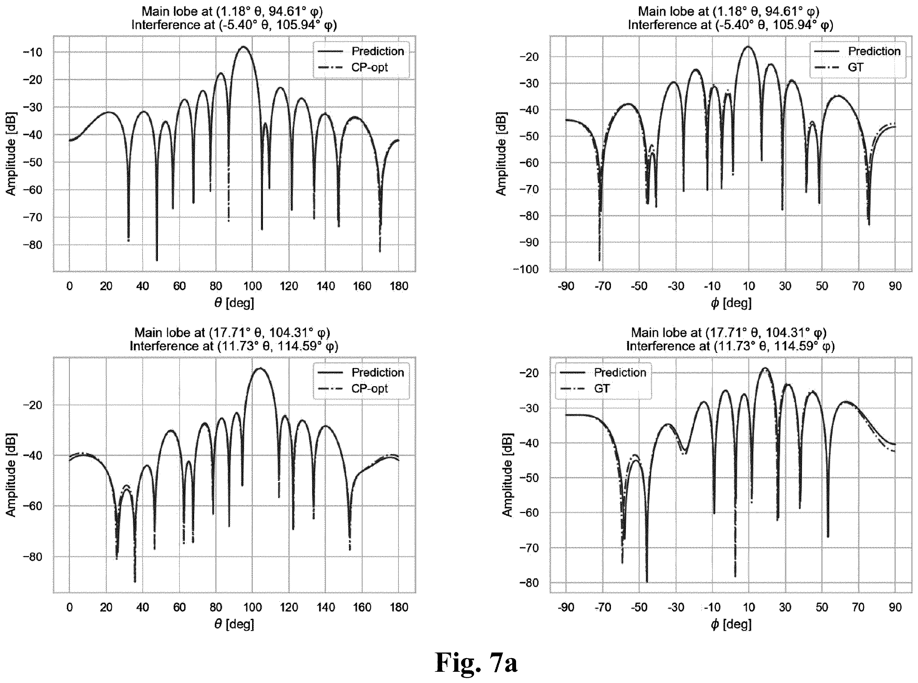

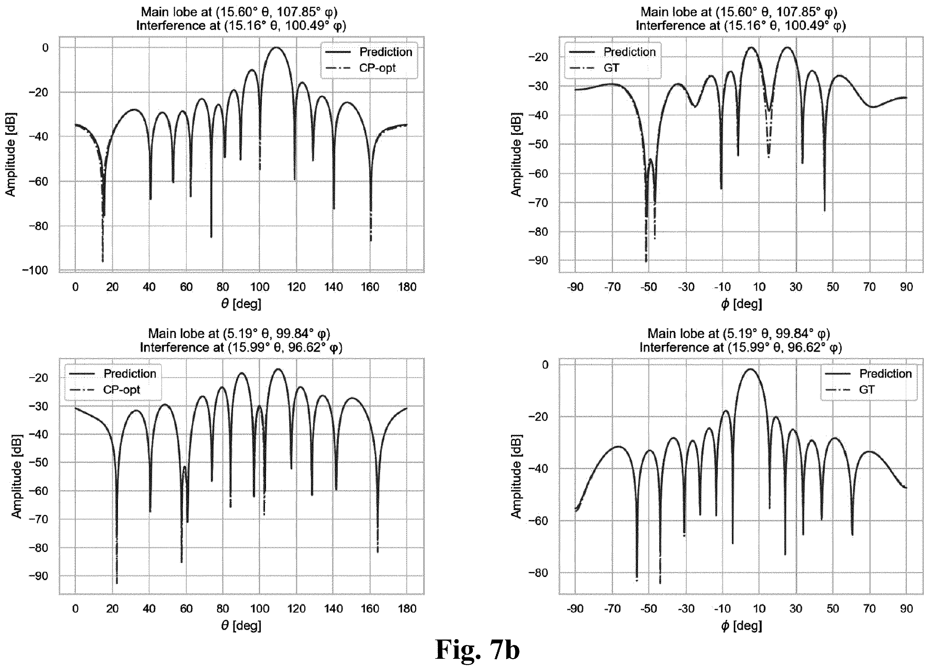

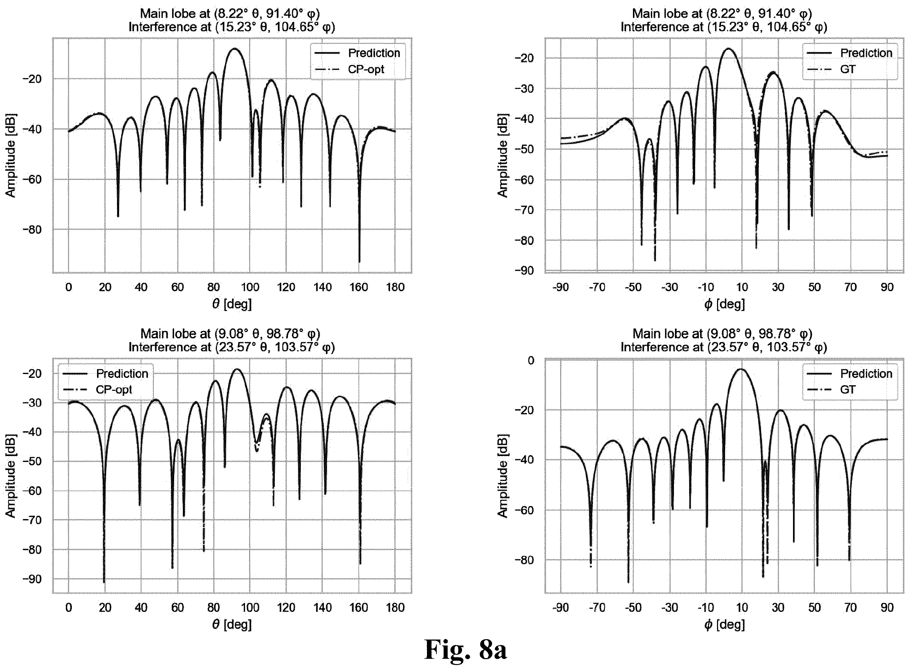

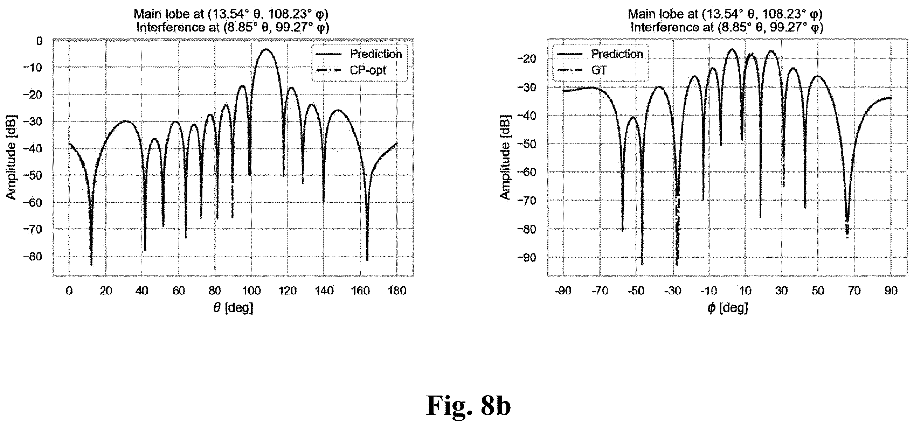

Figures 7a-7b and 8a-8b show 2D sections along the axes ϕ and **θ**, and compare patterns and results obtained with an optimal CP solver and an FNN network, as in the present description. The agreement of the two results is apparent.

The following table shows a comparison between the processing time required by the convex optimizer and the suggested network:

| | GPU | CPU |
|---|---|---|
| Suggested Method | 2.181 ms | 16.473 ms |
| Optimizer (convex) | // | 7157.216 ms |

The tests were performed using a workstation machine equipped with an 6core i5-9600k Intel processor (CPU) and a Nvidia 2070 graphics card (GPU). The convex optimizer used for the comparison is the CVX.

From the previous table it can be noticed that the time required to calculate the solution by the convex optimizer is about 450 times longer than the time required by the suggested solution in CPU. Compared to the GPU version, the convex optimizer is about 3500 times slower than the suggested solution. It is important to note that the suggested solution, both in GPU and in CPU, takes a few milliseconds, which is a time compatible with the "near real-time" applications described above.

The following table shows a comparison between the feed-forward model according to the present description (example above) and the old convolutional model. Both models were trained on the data previously generated in [19] to make the comparison fair.

| Model | Train MSE | Test MSE | MaxSSL | IS Error | Neighborhood IS Error |
|---|---|---|---|---|---|
| CP-opt | 0 | 0 | 0.9470 | 0.00 | 0.00 |
| CNN | 2.6427e-10 | 3.6412e-10 | 0.8612 | 11.86 | 0.00 |
| Feed Forward | 8.5691e-12 | 8.8492e-12 | 0.9641 | 0.00 | 0.00 |

It is possible to notice a significant improvement in the performance of the feed-forward model with respect to the convolutional one (CNN).

This improvement can be intuitively motivated by various reasons. First of all, the features of convolutional neural networks are conventionally used to exploit the fact that the absolute position of a pattern in the input is less important than the presence thereof in a region of space which is somehow defined. This means that convolutional networks tend to recognize the presence of a pattern rather than the absolute location of that pattern; this is exacerbated by the use of pooling layers which increase this local translational invariance, which is useful for natural image classification, but is counterproductive in the beamforming domain where a small input change can cause a significant change in expected currents. The use of direct constraints as inputs allows the model to focus only on the mapping in the current domain, without computing the transformations on the images.

According to an aspect of the invention, a computer program comprises code means configured so that, when executed by the electronic computer, they carry out the method described above.

Any electronic calculator (with CPU, GPU, FPGA or else) can have the program described above installed thereon.

### Some advantages of the invention

Ss compared, for example, to the prior art in [19], the suggested method does not require as input the radiation pattern similar to the image but directly takes the parameters encoding the direction and the requirements of the radiation pattern (e.g., direction of the main lobe, interference direction, dB levels, etc.).

Indeed, in the method of the present description, a neural network of the Feed-Forward type (FNN) is employed, which works directly on the dataset/input vector and has no need to carry out the intermediate image preparation stage, as instead provided in [19] (see prior art description section above). Therefore, in the present description, it is possible to be completely free from a pre-assigned nominal pattern, and the intermediate image processing step is eliminated, thus improving the overall performance of the method in terms of calculation time and accuracy.

Moreover, in the present formulation of the problem, which sees the dataset/input vector as the only direct input of the network, the use of a CNN would not allow obtaining the same performances obtained by using an FNN. This is due to the fact that a CNN is designed to find and take advantage of possible spatial correlations between input data. The dataset/input vector encodes independent information which has no spatial correlation. A CNN directly applied to this set would favor the search for non-existent spatial correlations which would be misleading for machine learning purposes.

Therefore, while working on the same INPUT (data/input vector) and OUTPUT set (excitations/currents of the antenna array), the method according to the present description is significantly different from the one presented in [19] and overcomes the limitations and performance thereof.

Moreover, in one aspect of the present description, a set of coding vectors is synthetically generated with values distributed according to a probability distribution, in contrast to the method in [19], where the training datasets are generated in a non-probabilistic manner by means of an analytical discretization of the variability set with uniform pitch, involving an extensive exploration of the possible vectors (section IV of [19]). In the present description, on the other hand, a data generation approach based on a probability distribution is adopted, aiming at optimizing the training on the portion of possibilities of greatest applicational interest and therefore with an improvement in the performance obtained.

### References

1. C. Bencivenni, M. V. Ivashina, and R. Maaskant, "Multi-element aperiodic array synthesis by compressive sensing," in 2015 Int. Conf. on Electromagnetics in Advanced Appl. (ICEAA), 2015, pp. 223-226.
2. A. Capozzoli, C. Curcio, G. D'Elia, A. Liseno, and P. Vinetti, "Fast cpu/gpu pattern evaluation of irregular arrays," in Journal-Applied Computational Electromagnetics Society, 2010.
3. A. Capozzoli and G. D'Elia, "Global optimization and antennas synthesis and diagnosis, part one: concepts, tools, strategies and performances," Progress In Electromagnetics Research, vol. 56, pp. 195-232, 2006.
4. P.Rocca, N.Anselmi, and A.Massa,"Optimal Synthesis Of Robust Beam-former weights exploiting interval analysis and convex optimization," IEEE Trans. Antennas Propag., vol. 62, no. 7, pp. 3603-3612, 2014.
5. T. Isernia, F. J. A. Pena, O. M. Bucci, M. D'Urso, J. F. Gomez, and J. A. Rodriguez, "A hybrid approach for the optimal synthesis of pencil beams through array antennas," IEEE Trans. Antennas Propag., vol. 52, no. 11, pp. 2912-2918, 2004.
6. Y. Rahmat-Samii, J. M. Kovitz, and H. Rajagopalan, "Nature-inspired optimization techniques in communication antenna designs," Proc. of the IEEE, vol. 100, no. 7, pp. 2132-2144, 2012.
7. R.L.Haupt, "Genetic Algorithm Design Of Antenna Arrays," in 1996 IEEE Aerospace Applications Conf. Proc., vol. 1, 1996, pp. 103-109 vol.1.
8. T. Isernia and G. Panariello, "Optimal Focusing Of Scalar Fields Subject To arbitrary upper bounds," Electronics letters, vol. 34, no. 2, pp. 162-164, 1998.
9. T. Isernia, P. Di Iorio, and F. Soldovieri, "An effective approach for the optimal focusing of array fields subject to arbitrary upper bounds," IEEE Trans. Antennas Propag., vol. 48, no. 12, pp. 1837-1847, 2000.
10. G. Oliveri and T. Moriyama, "Hybrid pso-cp technique for the synthesis of non-uniform linear arrays with maximum directivity," J. of Electromagnetic Waves and Applications, vol. 29, no. 1, pp. 113-123, 2015.
11. P. Rocca, L. Manica, and A. Massa, "Hybrid approach for sub-arrayed monopulse antenna synthesis," Electronics Letters, vol. 44, no. 2, pp. 75-76, 2008.
12. M. D'Urso and T. Isernia, "Solving some array synthesis problems by means of an effective hybrid approach," IEEE Trans. Antennas Propag., vol. 55, no. 3, pp. 750-759, 2007.
13. A. Massa, D. Marcantonio, X. Chen, M. Li, and M. Salucci, "DNNs as Applied to Electromagnetics, Antennas, and Propagation-A Review," IEEE Antennas and Wireless Propagation Letters, vol. 18, no. 11, pp. 2225-2229, Nov. 2019, conf. Name: IEEE Antennas and Wireless Propagation Letters.
14. A. Zooghby, C. Christodoulou, and M. Georgiopoulos, "Neural network-based adaptive beamforming for one- and two-dimensional antenna arrays," IEEE Trans. Antennas Propag., vol. 46, pp. 1891-1893, 1998.
15. L. Merad, F. T. Bendimerad, S. M. Meriah, and S. A. Djennas, "Neural Networks for Synthesis and Optimization of Antenna Arrays," vol. 16, no. 1, p. 8, 2007.
16. Z. D. Zaharis, T. V. Yioultsis, C. Skeberis, T. D. Xenos, P. I. Lazaridis,G. Mastorakis, and C. X. Mavromoustakis, "Implementation of antenna array beamforming by using a novel neural network structure," in 2016 Int. Conf. on Telec. and Mult. (TEMU), Jul. 2016, pp. 1-5.
17. T. Shan, M. Li, S. Xu, and F. Yang, "Synthesis of Reflectarray Based on Deep Learning Technique," in 2018 Cross Strait Quad-Regional Radio Science and Wireless Technology Conf. (CSQRWC), 2018, pp. 1-2
18. A. M. Elbir, K. V. Mishra, and Y. C. Eldar, "Cognitive Radar Antenna Selection via Deep Learning," arXiv: 1802.09736 [eess, stat], Feb. 2019.
19. Bianco, S., Napoletano, P., Raimondi, A., Feo, M., Petraglia, G., & Vinetti, P. (2020, September). AESA Adaptive Beamforming Using Deep Learning. In 2020 IEEE Radar Conference (RadarConf20) (pp. 1-6). IEEE

Preferred embodiments have been described above and some variants of the present invention have been suggested, but it is understood that those skilled in the art may make modifications and changes without departing from the related scope of protection, as defined by the appended claims.

## Claims

1. A method for reconfiguring radiation patterns of AESA antennas with N radiating elements in order to cancel interfering signals, comprising the following steps:
A. providing a one-dimensional coding vector for coding the desired constraints on the radiation pattern, where the coding vector comprises the following components with respect to a spherical reference system centered on the antenna array:
- a direction where maximum directivity is required for the azimuth radiation pattern;
- a direction where maximum directivity is required for the elevation radiation pattern;
- a direction of the azimuth interference;
- a position of the elevation interference;
- a Side Lobe Level (SLL) optimization threshold, for the side lobes; and
- a Side Lobe Level Interference (SLL_{I}) optimization threshold, for the interference in said one or more directions;
B. directly providing said one-dimensional coding vector to a feed-forward deep neural network exclusively trained on one-dimensional coding vectors to reduce the interference detected by the antenna array along said one or more directions;
C. obtaining, from said feed-forward deep neural network, a vector of 2^{∗}*N* real values, corresponding to the real and imaginary parts of the antenna excitation currents; and
D. reconfiguring the excitation currents of the antenna array based on said optimized radiation pattern;
wherein the feed-forward deep neural network is a neural network with different layers, some fully connected and others connected with highway connections, and wherein non-linear activation functions are used after each layer, up to and excluding the output layer.

2. A method according to claim 1, wherein the interfering signal is a signal selected from the group comprising: jammer, further in-band source, multipath.

3. A method according to claim 1 or 2, wherein the training of the expert algorithm occurs according to the following steps:
B1. Synthetically generating a set of coding vectors with values distributed according to a probability distribution;
B2. Supplying said set of vectors to a convex optimizer which returns an optimized vector for each vector in order to cancel the interfering signals; and
B3. Using said set of coding vectors with distributed values and said one or more optimized vectors to train the feed-forward deep neural network using a deviation measure and a corresponding acceptability threshold.

4. A method according to one or more of claims 1 to 3, wherein the incompletely connected layers have connections of the highway type.

5. A method according to one or more of claims 1 to 4, wherein, during step D, the reconfiguration occurs by means of a conversion matrix.

6. An electronic computer program, comprising code means configured so that, when executed by the electronic computer, they carry out the method according to one or more of claims 1 to 5.

7. An electronic computer, **characterized in that** said electronic computer program according to claim 4 is installed thereon.
